# EUROPÄISCHE PATENTSCHRIFT

(11) **EP 1 158 316 B1**
(45) Veröffentlichungstag und Bekanntmachung des Hinweises auf die Patenterteilung: **23.07.2003**
(21) Anmeldenummer: 01110569.9
(22) Anmeldetag: 30.04.2001
(51) Int. Cl.: G02B 5/18

(54) **Verwendung eines Beugungsgitters mit hohem Aspektverhältnis**
Use of a diffraction grating with a high aspect ratio
Utilisation d'un réseau de diffraction à haut facteur de forme

(30) Priorität: 24.05.2000 DE 10025694
(43) Veröffentlichungstag der Anmeldung: 28.11.2001
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Kleemann, Bernd, 73431 Aalen (DE); Heidemann, Klaus, 73447 Oberkochen (DE)
(74) Vertreter: Ostertag, Ulrich, Dr.

(56) Entgegenhaltungen:
- EP-A- 1 003 078
- DE-C- 4 421 407
- US-A- 4 506 949
- US-A- 4 714 308
- US-A- 4 915 463
- US-A- 5 116 461
- US-A- 5 629 804
- BRUNDRETT D L ET AL: "POLARIZING MIRROR/ABSORBER FOR VISIBLE WAVELENGTHS BASED ON A SILICON SUBWAVELENGTH GRATING: DESIGN AND FABRICATION" APPLIED OPTICS, OPTICAL SOCIETY OF AMERICA,WASHINGTON, US, Bd. 37, Nr. 13, 1. Mai 1998 (1998-05-01), Seiten 2534-2541, XP000754633 ISSN: 0003-6935
- WENYONG DENG ET AL: "FABRICATION AND PROPERTIES OF VISIBLE-LIGHT SUBWAVELENGTH AMORPHOUSSILICON TRANSMISSION GRATINGS" JOURNAL OF VACUUM SCIENCE AND TECHNOLOGY: PART B, AMERICAN INSTITUTE OF PHYSICS. NEW YORK, US, Bd. 13, Nr. 6, 1. November 1995 (1995-11-01), Seiten 2879-2882, XP000558362 ISSN: 0734-211X
- FISUN A I: "MONOFREQUENCY EXCITATION OF OPEN RESONATOR WITH INCLINED COMB GRATING" INTERNATIONAL JOURNAL OF INFRARED AND MILLIMETER WAVES, PLENUM PUBLISHING, NEW YORK, US, Bd. 18, Nr. 7, 1. Juli 1997 (1997-07-01), Seiten 1431-1443, XP000694577 ISSN: 0195-9271

## Beschreibung

Die Erfindung betrifft Verwendungen eines Beugungsgitters mit einer Vielzahl paralleler, periodisch aufeinanderfolgender Beugungsstrukturen, die auf einem Träger angeordnet sind und jeweils einen sich von einer Grundfläche des Trägers aus erstreckenden Steg umfassen.

Bekannte derartige Beugungsgitter weisen insbesondere für die Polarisationsrichtung, die senkrecht auf der Längserstreckungsrichtung der Stege steht (TM-Polarisation), eine verhältnismäßig schlechte Reflexionseffizienz, d.h. eine verhältnismäßig schlechte Beugungseffizienz in der genutzten Beugungsordnung, auf. Diese schwankt zudem stark mit dem Einfallswinkel bzw. der Lichtwellenlänge. Die Schwankungsbreite der Reflexionseffizienz in einem relativ engen Bereich um den Einfallswinkel bzw. die Lichtwellenlänge, d.h. der Abstand zwischen einem Minimal- und einem Maximalwert innerhalb dieses Bereichs, liegt dabei im Bereich von mehreren zehn Prozent.

Sind die Lichtwellenlänge sowie der Einfallswinkel aufgrund der optischen Anordnung, in der das bekannte Beugungsgitter eingesetzt ist, fest vorgegeben, war bisher die sich ergebende Reflexionseffizienz dem Zufall überlassen: z.B. kann für die TM-Polarisationsrichtung für diese Vorgaben gerade ein Minimum der Reflexionseffizienz vorliegen. In Anwendungen, bei denen eine hohe Reflexionseffizienz des Beugungsgitters für eine vorgegebene Lichtwellenlänge und einen vorgegebenen Einfallswinkel gefordert ist, z.B. eine Reflexionseffizienz im Bereich des Maximalwerts der Reflexionseffizienzen für diese Polarisationsrichtung, die für diesen Gittertyp im Bereich um die vorgegebene Einfallsrichtung bzw. Lichtwellenlänge erzielbar sind, kann dies nicht toleriert werden.

Aus einem Artikel in "Applied Optics", Optical Society of America, Washington, US (01-05-1998), 37(13), Seiten 2534-2541 und der US-A-51 16 461 sind bereits in Reflexion betriebene Beugungsgitter bekannt, bei denen die Stege etwa einen rechteckigen Querschnitt aufweisen und die Stege in Einzelfällen auch eine parallel zur Grundfläche gemessene Breite besitzen, die kleiner als 100nm ist.
Die erste dieser Druckschriften betrifft die Verwendung eines Subwellenlängen-Gitters als polarisierender Absorber, während die zweite Druckschrift ein Laser-Einkoppelungsgitter beschreibt.

Aus einem Artikel in "Journal Of Vacuum Science Art Technology", Part B, American Institute Of Physics, New York, US (01-11-1995), 13(6), Seiten 2879-2882, geht ein in Trannsmission betriebenes Beugungsgitter hervor, dessen Stege ebenfalls rechteckigen Querschnitt aufweisen, wobei sich für einzelne Ausführungsbeispiele Stegbreiten unter 100nm errechnen lassen.

In der DE-C-44 21 407 sind Hologramme beschrieben, die als Sicherheitsmerkmale für Wertgegenstände verwendet werden sollen. Diese Hologramme weisen Beugungsstrukturen mit Stegen auf, die einen rechteckigen Querschnitt besitzen und in Einzelfällen auch eine Breite von weniger als 100 nm aufweisen können.

Aufgabe der vorliegenden Erfindung ist es, eine vorteilhafte Verwendung von Beugungsgittern bestimmter Bauweise anzugeben.

Diese Aufgabe wird durch die im Anspruch 1 angegebene Erfindung gelöst.

Die Stege des erfindungsgemäß in Littrowanordnung verwendeten Beugungsgitters mit Stegbreiten unter 100nm werden im folgenden auch "schmale" Stege genannt. Mit einer Rechnung, die die Wechselwirkung der Lichtstrahlen mit TM-Polarisation mit den Stegen einbezieht, läßt sich zeigen, daß sich bei diesen Stegbreiten überraschenderweise eine erheblich bessere Reflexionseffizienz des Beugungsgitters auch für TM-Polarisation ergibt. Diese schwankt zudem in Abhängigkeit von der Einfallsrichtung und der Wellenlänge der einfallenden Lichtstrahlen nicht wie bei bekannten Beugungsgittern mit breiteren Stegen stark.

Erfindungsgemäß wurde erkannt, daß sich Gitter mit diesen schmalen Stegen besonders für die Anwendung in Littrowaneignen. In einer derartigen optischen Konfiguration ist bei gegebener, oft herstellungsbedingter Gitterkonstante und festgelegter Lichtwellenlänge auch die Einfallsrichtung der Lichtstrahlen festgelegt. Hier besteht also kein Variationsspielraum für die Auslegung der optischen Anordnung, so daß der Vorteil der nicht kritisch von den Parametern "Einfallsrichtung" bzw. "Lichtwellenlänge" abhängenden Reflexionseffizienz des Beugungsgitters für die TM-Polarisation voll zum Tragen kommt.

Obwohl sich aus der Rechnung die besten Reflexionseffizienzen bei Stegbreiten im Bereich von 10 nm ergeben, erscheint die Verwendung einer eine Stegbreite von 50 nm als bester Kompromiß zwischen Reflexionseffizienz und Herstellungsaufwand.

Die Höhe des verwendeten Stegs über der Grundfläche kann mehr als 200 nm, bevorzugt zwischen 200 nm und 600 nm betragen. Ebenfalls überraschend zeigte sich bei der die Polarisationswechselwirkung einbeziehenden Rechnung, daß die Reflexionseffizienzen von den Steghöhen abhängen. Oberhalb einer Steghöhe von 200 nm nähern sich die Reflexionseffizienzen sehr schnell an einen Optimalwert an, der bei weiterer Vergrößerung der Steghöhe sich nur noch periodisch wiederholt. Wiederum aus herstellungstechnischen Gründen bietet sich dabei die zu einer gegebenen Reflexionseffizienz gehörende niedrigste Steghöhe an.

Die Mittelebene des verwendeten Stegs kann senkrecht auf der Grundfläche stehen. Ein derartiges Beugungsgitter läßt sich relativ einfach herstellen, da die Vorzugsrichtung der Stegbearbeitung senkrecht auf der Grundfläche des Trägers steht.

Alternativ kann die Mittelebene des verwendeten Stegs mit der Grundfläche einen von 90 ° verschiedenen Winkel einschließen. Mittels einer derartigen Neigung der Stege gegenüber der Grundfläche des Trägers läßt sich zusätzlich erreichen, daß die dem einfallenden Lichtstrahl zugewandte Stegflanke im Bereich eines Blaze-Winkels für die jeweilige Anwendung des Beugungsgitters steht. Eine zusätzliche Erhöhung der Reflexionseffizienz ist die Folge.

Bevorzugt wird ein Beugungsgitter aus Quarzglas oder Silizium verwendet. Derartige Materialien lassen sich durch reaktives lonenstrahlätzen (RIBE) bzw. durch reaktives lonenätzen (RIE) bearbeiten und bieten sich daher zur holographischen Herstellung der erfindungsgemäßen Beugungsstrukturen an. Bei der Verwendung von kristallinem Material wie z.B. Silizium kann man zusätzlich die Kristalloberfläche zur kristallographischen Orientierung des Kristalls derart ausrichten, daß sich eine Vorzugsrichtung bei der Bearbeitung, z. B. durch anisotropes chemisches Ätzen mit KOH, ergibt. Diese Vorzugsrichtung läßt sich z. B. bei der Herstellung geneigter Stege ausnutzen.

Alternativ kann verwendete Beugungsgitter aus dotiertem Quarz bestehen. Aufgrund seines vorteilhaften Expansionsverhaltens eignet sich ein derartiges Material in der Benutzung als Littrowgitter besonders.

Umfaßt das verwendete Beugungsgitter gemäß einer alternativen Ausführungsform ein dielektrisches Schichtsystem, so kann die Schichtfolge so gewählt werden, daß auf eine zusätzliche, die Reflexionseffizienz des Beugungsgitters steigernde Beschichtung verzichtet werden kann.

Das Schichtsystem kann dabei eine Mehrzahl von aufeinanderfolgenden Schichten aus Al₂O₃ (hochbrechend) und MgF₂ (niedrigbrechend) oder aus LaF₃ (hochbrechend) und MgF₂ (niedrigbrechend) umfassen. Ein derartig alternierendes Schichtsystem eignet sich gut zur Herstellung einer hochreflektierenden Schicht für ultraviolette Lichtwellenlängen.

Weist das verwendete Beugungsgitter eine die Reflektivität steigernde Beschichtung auf, kann wiederum darauf verzichtet werden, den Träger als dielektrisches Schichtsystem auszuführen, wobei trotzdem eine hohe Reflektivität erreicht wird. So ergibt sich eine kostengünstige Herstellung des Beugungsgitters.

Bevorzugt ist die Beschichtung dabei eine Aluminium-Beschichtung. Eine derartige Beschichtung ist relativ preiswert und weist eine hohe erreichbare Reflektivität auf.

Vorzugsweise wird das Beugungsgitter in dritter Ordnung der Lichtwellenlänge verwendet. Insbesondere bei kleinen Lichtwellenlängen, z. B. im UV-Bereich ergeben sich dadurch reduzierte Anforderungen an die Herstellung des Beugungsgitters, da in dritter Ordnung ein größerer Abstand der Beugungsstrukturen als in der ersten Ordnung die Beugungsbedingung erfüllt.

Das Beugungsgitter wird bevorzugt zur Beugung von UV-Licht mit einer Wellenlänge eingesetzt, die geringer ist als 250 nm. Derartige UV-Lichtquellen sind insbesondere in der Projektions-Lithographie zur Herstellung von Halbleiterstrukturen bei der Chip-Fertigung im Einsatz.

Ausführungsbeispiele der Erfindung werden nachfolgend anhand der Zeichnung näher erläutert; es zeigen:
- Figur 1:: einen Schnitt durch einen Ausschnitt eines Reflexions-Beugungsgitters, wobei die Schnittebene senkrecht zur Mittelebene von als Stege ausgeformten Beugungsstrukturen des Reflexions-Beugungsgitters verläuft;
- Figuren 2 und 3:: zwei Diagramme der Abhängigkeit der Beugungseffizienz bzw. der Absorption eines Reflexions-Beugungsgitters nach Figur 1 von der Stegbreite;
- Figuren 4 bis 6:: Momentaufnahmen bei der Herstellung eines Reflexions-Beugungsgitters nach Figur 1;
- Figuren 7 bis 9:: zur Figur 1 ähnliche Darstellungen alternativer Ausführungsformen eines Reflexionsbeugungsgitters, wobei jeweils nur ein Steg gezeigt ist.

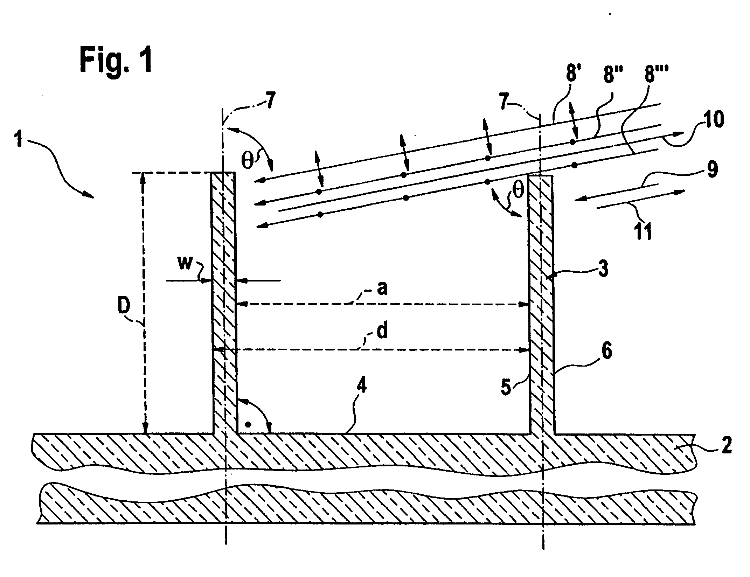

Figur 1 zeigt einen Ausschnitt eines insgesamt mit dem Bezugszeichen 1 versehenen Reflexions-Beugungsgitters mit einem Träger 2, auf dem eine Vielzahl von periodisch angeordneten Stegen 3 angeformt sind, von denen in Figur 1 beispielhaft zwei Stege 3 im Querschnitt dargestellt sind. Der Träger 2 sowie die Stege 3 bestehen aus Quarzglas.

Die Stege 3 haben jeweils eine Breite w von 20 nm, gemessen jeweils an der oberen Stirnseite des Stegs 3 senkrecht zu dessen Mittelebene 7, die ihrerseits senkrecht zur Zeichenebene von Figur 1 verläuft. Die Höhe D der Stege 3 über der Grundfläche 4 beträgt 250 nm.

Die Stege 3 haben einen rechteckigen Querschnitt, d.h. die Flanken 5, 6 eines Stegs 3 schließen mit der Grundfläche 4 einen im wesentlichen rechten Winkel ein. Insbesondere die Mittelebene 7 jedes Stegs 3 steht auf der Grundfläche 4 senkrecht.

Die Dicke des Trägers 2 ist verglichen mit der Höhe D der Stege 3 sehr groß, z.B. im Bereich mehrerer Millimeter, weswegen der Träger 2 in Figur 1 unterbrochen dargestellt ist.

Eine Beugungsstruktur des Reflexions-Beugungsgitters 1 umfaßt jeweils einen Steg 3 und einen diesem benachbarten Zwischenraum a bis hin zum nächsten Steg 3. Die Breite d einer derartigen Beugungsstruktur ist daher die Summe aus der Stegbreite w und dem Zwischenraum a zwischen zwei Stegen 3. Die Breite d ist davon abhängig, in welcher optischen Anwendung das Reflexions-Beugungsgitter 1 eingesetzt wird. Im in Figur 1 vorliegenden Fall, der nachfolgend beschrieben wird, ist die Breite d 297 nm.

In Littrow-Konfiguration funktioniert das Reflexions-Beugungsgitter 1 folgendermaßen:

Bezüglich parallel einfallender Lichtstrahlen, die von einer Lichtquelle (nicht dargestellt) ausgesandt werden und von denen in Figur 1 beispielhaft die Lichtstrahlen 8', 8", 8"', 9 dargestellt sind, ist das Reflexions-Beugungsgitter 1 so angeordnet, daß die Mittelebenen 7 der Stege 3 mit den einfallenden Lichtstrahlen 8, 9 den Littrow-Winkel Theta von 77°, der sich für die angegebene Breite d und eine Lichtwellenlänge von 193,35 nm in dritter Ordnung ergibt, einschließen. Die angegebene Lichtwellenlänge ist die eines Argon-Fluorid-Excimerlasers. Die einfallenden Lichtstrahlen 8, 9 können dabei sowohl senkrecht zur Erstreckungsrichtung der Stege 3 (TM-Polarisation, Lichtwelle 8') als auch parallel zur Erstreckungsrichtung der Stege polarisiert sein (TE-Polarisation, Lichtwellen 8'', 8'''), wie dies in Figur 1 schematisch dargestellt ist.

Bei dem gewählten Abstand d der Beugungstrukturen ist für in die Einfallsrichtung zurückreflektierte Lichtstrahlen 10, 11 der angegebenen Wellenlänge die Beugungsbedingung, d.h. die Bedingung konstruktiver Interferenz dritter Ordnung erfüllt. Das Reflexions-Beugungsgitter 1 wirkt also für die einfallenden Lichtstrahlen 8, 9 mit der Wellenlänge 193,35 nm als Spiegel, der die einfallenden Lichtstrahlen 8, 9 in dritter Beugungsordnung in sich zurückreflektiert.

Für die oben genannten Bedingungen läßt sich für verschiedene Steghöhen D die Effizienz des Reflexions-Beugungsgitters in Abhängigkeit von der Stegbreite w berechnen:

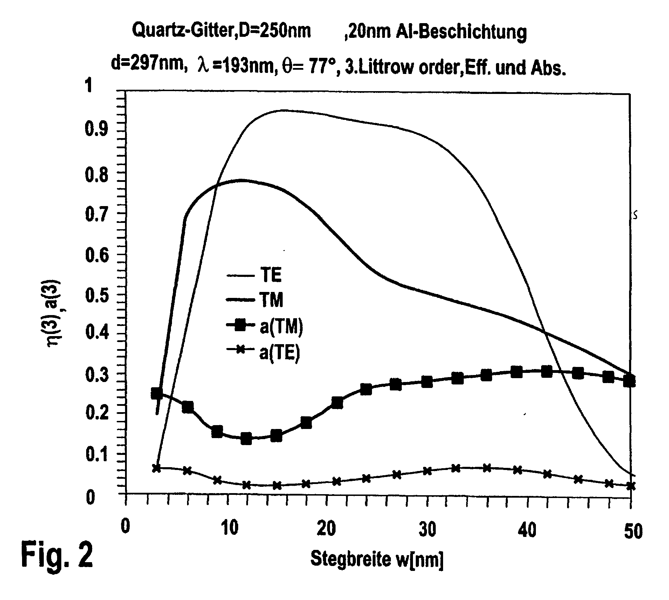

Für eine Steghöhe D von 250 nm ergeben sich für einen Stegbreitenbereich zwischen ca. 3 und 50 die in Figur 2 dargestellten Abhängigkeiten der Reflexionseffizienzen für TE-Polarisation (dünne durchgezogene Linie) und TM-Polarisation (dickere durchgezogene Linie) sowie die Absorptionskurven für die TM-Polarisation (dicke durchgezogene Kurve mit Quadraten) und die TE-Polarisation (dünnere durchgezogene Kurve mit Kreuzen). Für die TE-Polarisation ergibt sich bei einer Stegbreite w von ca. 16 nm ein Maximum der Reflexionseffizienz, das größer ist als 95%. Die Reflexionseffizienz ist für diese Polarisation in einem Stegbreitenbereich zwischen ca. 9 und ca. 35 nm größer als 80%. Für die TM-Polarisation wird eine maximale Reflexionseffizienz von > 80% in einem Stegbreitenbereich zwischen ca. 8 und ca. 15 nm erreicht. In einem Stegbreitenbereich zwischen ca. 5 und ca. 22 nm liegt die Reflexionseffizienz für die TM-Polarisation über 60%. In diesen beschriebenen Bereichen hoher Reflexionseffizienz ist die Absorption der eingestrahlen Lichtwellen stets geringer als 30%, im Falle der TE-Polarisation sogar geringer als 10%.

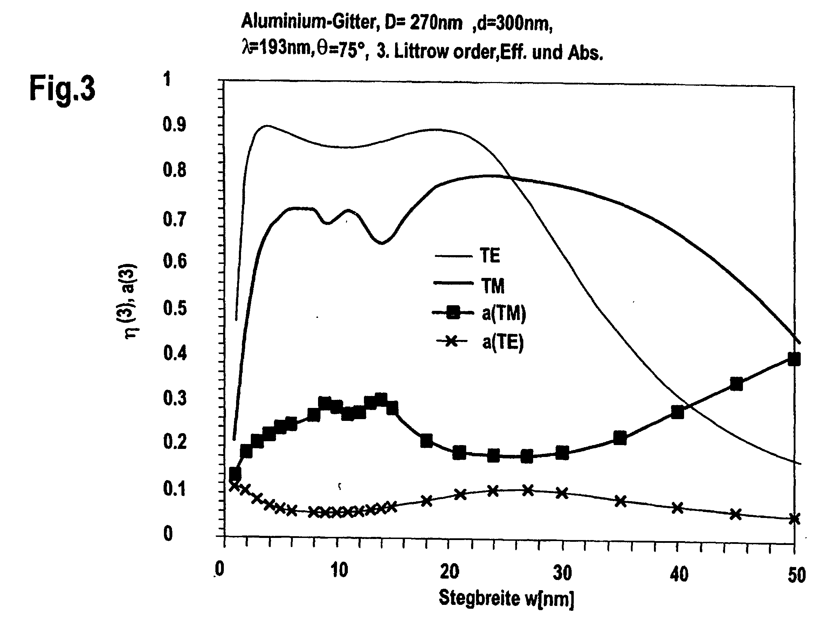

Ähnliche Effizienzen in Abhängigkeit von der Stegbreite w ergeben sich rechnerisch mit einer Steghöhe D von 270 nm, einer Gitterkonstante d von 300 nm und einem Littrow-Winkel Theta von 75°. In Figur 3 sind die Abhängigkeiten von Reflexionseffizienz und Absorption für die verschiedenen Polarisationen (analoge Linienwahl wie bei Figur 2) für einen Stegbreitenbereich zwischen ca. 2 und 50 nm bei dieser Steghöhe D für ein Gitter mit Stegen aus Aluminium dargestellt. Für die TE-Polarisation ergibt sich ein maximales Plateau der Reflexionseffizienz von ca. 90% im Bereich einer Stegbreite w zwischen 3 nm und 20 nm. Die Reflexionseffizienz ist bei dieser Polarisation bis zu einer Stegbreite w, die bei ungefähr 20 nm liegt, größer als 60%. Für die TM-Polarisation ergibt sich für Stege mit einer Breite w zwischen ca. 4 und ca. 40 nm eine Reflexionseffizienz, die im Bereich von 70% liegt. Die Absorptionswerte sind hierbei ähnlich denen, die in Figur 2 beschrieben wurden.

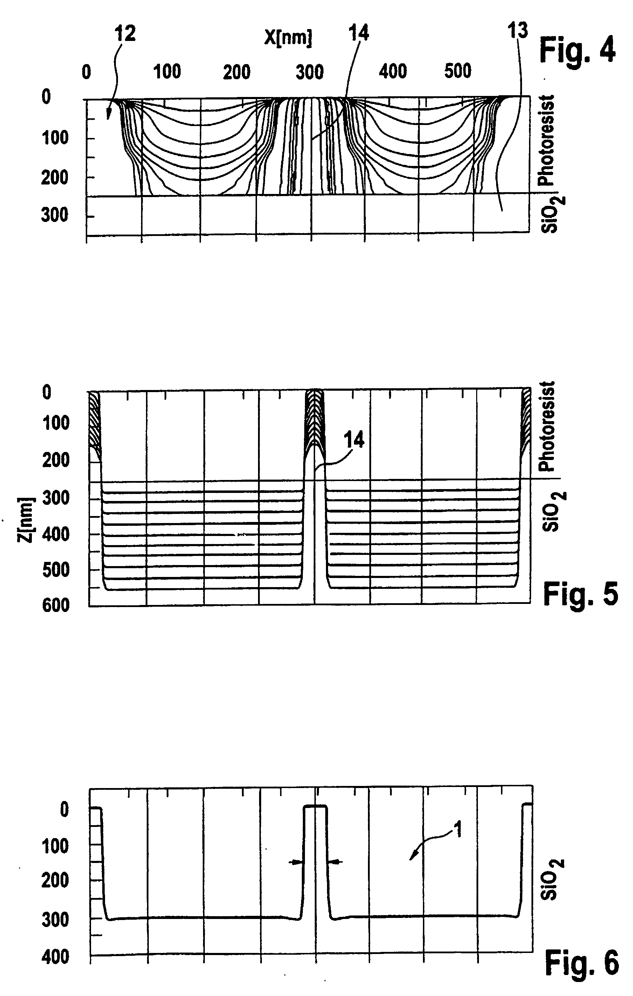

Die Herstellung eines Reflexions-Beugungsgitters nach Art des Reflexions-Beugungsgitters 1 von Figur 1 verdeutlichen die Herstellungsstadien, die in den Figuren 4 bis 6 dargestellt sind. Die Schnittebene dieser Figuren ist analog zu derjenigen der Figur 1 gewählt.

Im ersten Herstellungsschritt wird ein Gitterrohling 13 aus Quarzglas mit einer Photoresist-Maske 12 beschichtet, holographisch belichtet und sodann entwickelt. In Figur 4 ist der zeitliche Verlauf des Querschnitts dieser Struktur im Zuge der Entwicklung der Photoresist-Maske 12 gezeigt. Die oberste Kurve von Figur 4 stellt die unentwickelte Photoresist-Maske 12 dar, deren ebene Oberfläche parallel zu derjenigen des Gitterrohlings 13 ist. Im Verlauf der Entwicklung verbleiben in der Bildmitte und den seitlichen Rändern von Figur 4 Photoresist-Stege 14, während zwischen den Stegen 14 der Photoresist vollständig entfernt wird. Die einzelnen Kurven, die in Figur 4 dargestellt sind, geben die momentane Höhe des Photoresists im Verlauf dieser Photoresist-Entfernung zu aufeinanderfolgenden Zeitpunkten an. Die Photoresist-Stege 14 haben gemäß der Vorgabe durch die Belichtung zueinander schon den Abstand, der dem für die Beugungsstrukturen gewünschten Abstand von 295,8 nm ergibt.

In einem zweiten Herstellungsschritt wird die im ersten Schritt entstandene Struktur einem reaktiven Ionenstrahlätzen (RIBE) mit CF₄ unterzogen. In Figur 5 ist der zeitliche Verlauf des Querschnitts des Gitterrohlings 13 mit den Photoresist-Stegen 14 bei diesem Vorgang dargestellt. Sowohl die Photoresist-Stege 14 als auch der Gitterrohling 13 werden schichtweise mit senkrechter Vorzugsrichtung abgetragen, bis im Gitterrohling 13 eine Ätztiefe von ca. 550 nm, gemessen von der ursprünglichen Oberfläche der Photoresist-Maske 12, erreicht ist. Diesen Zustand stellt die unterste Kurve von Figur 5 dar.

In einem abschließenden Herstellungsschritt werden die restlichen Photoresist-Stege 14 entfernt. Hierdurch ergibt sich ein Reflexions-Beugungsgitter nach Art des Reflexions-Beugungsgitters 1 von Figur 1, wie in Figur 6 dargestellt.

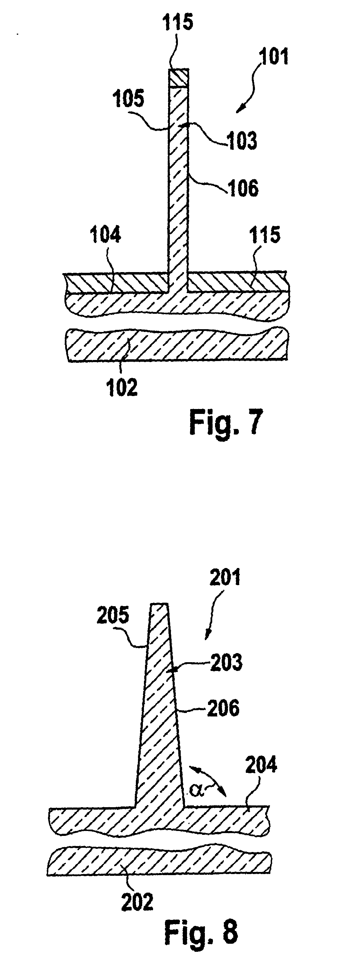

Alternative Ausführungsformen des Reflexions-Beugungsgitters 1 sind in den Figuren 7 bis 9 dargestellt. Komponenten, die denjenigen entsprechen, die schon vorstehend beschrieben wurden, sind mit jeweils um 100 erhöhten Bezugszeichen versehen und werden nicht nochmals im einzelnen erläutert.

Das Reflexions-Beugungsgitter 101 von Figur 7 weist eine Aluminium-Schicht 115 auf. Diese hat eine Stärke von ca. 20 nm. Bei der Beschichtung des Reflexions-Beugungsgitters 101 mit der Aluminium-Schicht 115 wurde eine Beschichtungstechnik mit einer Vorzugsrichtung gewählt, so daß zwar die Oberflächen des Trägers 102 sowie des Stegs 103, jedoch nicht die Flanken 105, 106 des Stegs 103 beschichtet sind. Alternativ können aber auch die Flanken eines Stegs in analoger Weise reflektiv beschichtet werden. Die Aluminium-Schicht 115 weist eine Reflektivität von nahezu 100% auf.

Die in den Figuren 4 und 5 dargestellten Verfahrensschritte zur Herstellung des Reflexions-Beugungsgitters 1 lassen sich gezielt zur Einstellung der Flankensteilheit der Stege 3 variieren. Auf diese Weise läßt sich ein in Figur 8 dargestelltes Reflexions-Beugungsgitter 201 mit Stegen 203 herstellen, deren Flanken 205, 206 nicht rechtwinklig auf der Grundfläche 204 stehen, sondern mit ihr einen von 90° verschiedenen Winkel α derart einschließen, daß der Steg 203 an seiner Basis stärker ist als an seiner Spitze. Zur Erhöhung der Effizienz des Reflexions-Beugungsgitters 201 kann die Neigung der Flanken 205, 206 z.B. derart sein, daß sie einem Blaze-Winkel für den entsprechenden Einsatz des Reflexions-Beugungsgitters 201 entspricht. Im Falle der oben beschriebenen Littrow-Konfiguration hätte der Flanken-Neigungswinkel α folgenden Wert: α = 180° - Theta. Dabei sollte der Flanken-Neigungswinkel α folgende Relation erfüllen: 90° < α < 105°. Insgesamt ist dadurch auch der Steg 203 "schmal" im oben genannten Sinne.

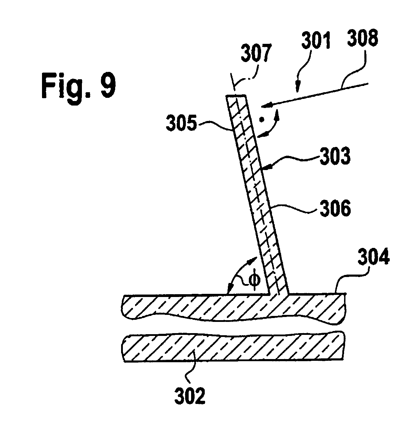

Bei dem in Figur 9 dargestellten Reflexions-Beugungsgitter 301 sind durch entsprechende Wahl der Vorzugsrichtung bei dem im Zusammenhang mit den Figuren 4 bis 6 beschriebenen Herstellungverfahren die Mittelebenen 307 der Stege 303 gegenüber der Grundfläche 304 des Trägers 302 geneigt. Der kleinere Winkel Φ, den die Mittelebene 307 mit der Grundfläche 304 einschließt, unterscheidet sich vom Winkel Theta höchstens um 20°, hat also einen Wert, der folgende Relation zum Littrow-Winkel Theta erfüllt: Theta - 20° < Φ < Theta + 20°.

Wird das Reflexions-Beugungsgitter 301, wie in Figur 9 durch die einfallende Lichtwelle 308 angedeutet, in Littrow-Konfiguration betrieben, fällt die einfallenden Lichtwelle 308 nahezu senkrecht zu den Mittelebenen 307 der Stege 303 auf das Gitter 301.

Die Anwendung der Reflexions-Beugungsgitter 1 bis 301 ist nicht auf die beschriebene Littrow-Konfiguration beschränkt. Auch andere Anwendungen, z.B. als Blaze-Gitter (Einfallswinkel ungleich Ausfallswinkel), sind denkbar, wobei auch hier die Neigung der Mittelebenen 7 bis 307 bzw. der Flanken 5 bis 305; 6 bis 306 entsprechend gewählt wird.

Ein Gitter mit den vorstehend beschriebenen Beugungsstrukturen kann auch als Phasengitter bei der interferometrischen Längenmessung eingesetzt werden.

Neben Quarzglas können als Trägermaterial auch anisotrope Materialien wie Silizium oder dotiertes Quarz oder auch ein dielektrisches Schichtsystem eingesetzt werden. Das dielektrische Schichtsystem ist z.B. eine alternierende Schichtung aus Al₂O₃ (hochbrechend) und MgF₂ (niedrigbrechend) oder LaF₃ (hochbrechend) und MgF₂ (niedrigbrechend), wobei z.B. 40 Doppelschichten dieser beiden Materialien eingesetzt werden. Die Schichtdicken des Einzelschichten des dielektrischen Schichtsystems werden so gewählt, daß das Reflexionsvermögen des Reflexions-Beugungsgitters für die eingesetzte Wellenlänge optimiert wird.

Je nach verwendetem Trägermaterial werden alternativ zu dem oben erwähnten reaktiven Ionenstrahlätzen (RIBE) beispielsweise auch reaktives Ionenätzen (RIE), Ionenstrahlätzen (IBE, bevorzugt im Zusammenhang mit einem dielektrischen Schichtsystem) oder anisotropisches chemisches Ätzen, (z.B. mit KOH, bevorzugt bei anisotropen Materialien wie kristallinem Silizium), eingesetzt.

## Patentansprüche

1. Verwendung eines Beugungsgitters mit einer Vielzahl paralleler, periodisch aufeinanderfolgender Beugungsstrukturen, die auf einem Träger (2) angeordnet sind und jeweils einen sich von einer Grundfläche (4) des Trägers (2) aus erstreckenden Steg (3) umfassen,
wobei
der Steg (3; 103; 203; 303) einen im wesentlichen rechteckigen Querschnitt aufweist und die senkrecht zur Mittelebene (7; 307) des Stegs (3; 103; 203; 303) und parallel zur Grundfläche (4; 104; 204; 304) gemessene Breite w des Stegs (3; 103; 203; 303) weniger als 100 nm, bevorzugt zwischen 20 nm und 60 nm, stärker bevorzugt im Bereich von 50 nm beträgt,
als Reflexionsgitter in einer Littrow-Konfiguration.

2. Verwendung eines Beugungsgitters nach Anspruch 1, bei welcher die Höhe D des Stegs (3; 103; 203; 303) über der Grundfläche (4; 104; 204; 304) mehr als 200 nm, bevorzugt zwischen 200 nm und 600 nm, beträgt.

3. Verwendung eines Beugungsgitters nach Anspruch 1 oder 2, bei welcher die Mittelebene (7) des Stegs (3) senkrecht auf der Grundfläche (4) steht.

4. Verwendung eines Beugungsgitters nach Anspruch 1 oder 2, bei welcher die Mittelebene (307) des Stegs (303) mit der Grundfläche (304) einen von 90° verschiedenen Winkel einschließt.

5. Verwendung eines Beugungsgitters nach einem der vorhergehenden Ansprüche, bei welcher das Beugungsgitter aus Quarzglas oder Silizium besteht.

6. Verwendung eines Beugungsgitters nach einem der Ansprüche 1 bis 4, bei welcher das Beugungsgitter aus dotiertem Quarz besteht.

7. Verwendung eines Beugungsgitters nach einem der Ansprüche 1 bis 4, bei welcher das Beugungsgitter ein dielektrisches Schichtsystem umfaßt.

8. Verwendung eines Beugungsgitters nach Anspruch 7, bei welcher das Schichtsystem eine Mehrzahl von aufeinanderfolgenden Schichten aus Al₂O₃ und MgF₂ umfaßt.

9. Verwendung eines Beugungsgitters nach Anspruch 7, bei welcher das Schichtsystem eine Mehrzahl von aufeinanderfolgenden Schichten aus LaF₃ und MgF₂ umfaßt.

10. Verwendung eines Beugungsgitters nach einem der Ansprüche 1 bis 6, bei welcher das Beugungsgitter eine die Reflektivität steigernde Beschichtung (115) aufweist.

11. Verwendung eines Beugungsgitters nach Anspruch 10, bei welcher die Beschichtung (115) eine Aluminium-Beschichtung ist.

12. Verwendung eines Beugungsgitters nach einem der Ansprüche 1 bis 11 in höherer, vorzugsweise dritter Ordnung der einfallenden Lichtwellenlänge.

13. Verwendung eines Beugungsgitters nach einem der Ansprüche 1 bis 12 zur Beugung von UV-Licht (8, 9; 308) mit einer Wellenlänge, die geringer ist als 250 nm.

## Claims

1. Use of a diffraction grating having a multiplicity of parallel, periodically successive diffraction structures, which are arranged on a substrate (2) and each comprise a segment (3) extending from a base surface (4) of the substrate (2),
wherein
the segment (3; 103; 203; 303) has an essentially rectangular cross section and the width w of the segment (3; 103; 203; 303), measured perpendicularly to the mid-plane (7; 307) of the segment (3; 103; 203; 303) and parallel to the base surface (4; 104; 204; 304), is less than 100 nm, preferably between 20 nm and 60 nm, more preferably in the vicinity of 15 nm,
as a reflection grating in a Littrow configuration.

2. Use of a diffraction grating according to Claim 1, in which the height D of the segment (3; 103; 203; 303) above the base surface (4; 104; 204; 304) is more than 200 nm, preferably between 200 nm and 600 nm.

3. Use of a diffraction grating according to Claim 1 or 2, in which the mid-plane (7) of the segment (3) is perpendicular to the base surface (4).

4. Use of a diffraction grating according to Claim 1 or 2, in which the mid-plane (307) of the segment (303) makes a non-90° angle with the base surface (304).

5. Use of a diffraction grating according to one of the preceding claims, in which the diffraction grating consists of quartz glass or silicon.

6. Use of a diffraction grating according to one of Claims 1 to 4, in which the diffraction grating consists of doped quartz.

7. Use of a diffraction grating according to one of Claims 1 to 4, in which the diffraction grating comprises a dielectric layer system.

8. Use of a diffraction grating according to Claim 7, in which the dielectric layer system comprises a multiplicity of successive layers of Al₂O₃ and MgF₂.

9. Use of a diffraction grating according to Claim 7, in which the dielectric layer system comprises a multiplicity of successive layers of LaF₃ and MgF₂.

10. Use of a diffraction grating according to one of Claims 1 to 6, in which the diffraction grating has a coating (115) which increases the reflectivity.

11. Use of a diffraction grating according to Claim 10, in which the coating (115) is an aluminium coating.

12. Use of a diffraction grating according to one of Claims 1 to 11 in a higher, preferably third order of the incident light wavelength.

13. Use of a diffraction grating according to one of Claims 1 to 12 for the diffraction of UV Light (8, 9, 308) having a wavelength which is less than 250 nm.

## Revendications

1. Utilisation d'un réseau de diffraction comportant une pluralité de structures de diffraction parallèles, se succédant périodiquement, disposées sur un support (2) et comprenant chacune une lame s'étendant depuis une surface de base (4) du support (2),
dans lequel
la lame (3 ; 103 ; 203 ; 303) présente une section essentiellement rectangulaire et la largeur w de la lame (3 ; 103 ; 203 ; 303) mesurée perpendiculairement au plan médian (7 ; 307) de la lame (3 ; 103 ; 203 ; 303) et parallèlement à la surface de base (4 ; 104 ; 204 ; 304) est inférieure à 100 nm, préférentiellement comprise entre 20 mn et 60 nm, encore plus préférentiellement de l'ordre de 50 nm,
comme réseau de réflexion dans une configuration de Littrow.

2. Utilisation d'un réseau de diffraction selon la revendication 1, dans lequel la hauteur D de la lame (3 ; 103 ; 203 ; 303) au-dessus de la surface de base (4 ; 104 ; 204 ; 304) est supérieure à 200 nm, préférentiellement comprise entre 200 nm et 600 nm.

3. Utilisation d'un réseau de diffraction selon la revendication 1 ou 2, dans lequel le plan médian (7) de la lame (3) est perpendiculaire à la surface de base (4).

4. Utilisation d'un réseau de diffraction selon la revendication 1 ou 2, dans lequel le plan médian (307) de la lame (303) fait avec la surface de base (304) un angle différent de 90°.

5. Utilisation d'un réseau de diffraction selon l'une des revendications précédentes, dans lequel le réseau de diffraction est en verre de quartz ou en silice.

6. Utilisation d'un réseau de diffraction selon l'une des revendications 1 à 4, dans lequel le réseau de diffraction est en quartz dopé.

7. Utilisation d'un réseau de diffraction selon l'une des revendications 1 à 4, dans lequel le réseau de diffraction comprend un système de couches diélectrique.

8. Utilisation d'un réseau de diffraction selon la revendication 7, dans lequel le système de couches comprend plusieurs couches successives en Al₂O₃ et MgF₂.

9. Utilisation d'un réseau de diffraction selon la revendication 7, dans lequel le système de couches comprend plusieurs couches successives en LaF₃ et MgF₂.

10. Utilisation d'un réseau de diffraction selon l'une des revendications 1 à 6, dans lequel le réseau de diffraction présente un revêtement (115) augmentant la réflectivité.

11. Utilisation d'un réseau de diffraction selon la revendication 10, dans lequel le revêtement (115) est un revêtement en aluminium.

12. Utilisation d'un réseau de diffraction selon l'une des revendications 1 à 11 à un ordre plus élevé, de préférence au troisième ordre, de la longueur d'onde lumineuse incidente.

13. Utilisation d'un réseau de diffraction selon l'une des revendications 1 à 12 pour diffracter de la lumière ultraviolette (8 ; 9 ; 308) d'une longueur d'onde inférieure à 250 nm.
